# EUROPÄISCHE PATENTSCHRIFT

(11) **EP 0 923 458 B1**
(45) Veröffentlichungstag und Bekanntmachung des Hinweises auf die Patenterteilung: **14.11.2001**
(21) Anmeldenummer: 98932181.5
(22) Anmeldetag: 24.06.1998
(51) Int. Cl.: B60H 1/00, F01P 11/14

(54) **VENTILVORRICHTUNG FÜR EINEN IM NEBENSTROM ANGEORDNETEN WÄRMETAUSCHER IN EINEM KÜHLKREISLAUF, INSBESONDERE EINER BRENNKRAFTMASCHINE**
VALVE DEVICE FOR A HEAT EXCHANGER ARRANGED IN A PARTIAL FLOW IN A COOLING CIRCUIT, ESPECIALLY IN AN INTERNAL COMBUSTION ENGINE
DISPOSITIF A SOUPAPE DESTINE A UN ECHANGEUR DE CHALEUR IMPLANTE DANS LE COURANT DERIVE D'UN CIRCUIT DE REFROIDISSEMENT, NOTAMMENT D'UN MOTEUR A COMBUSTION INTERNE

(30) Priorität: 04.07.1997 DE 19728722
(43) Veröffentlichungstag der Anmeldung: 23.06.1999
(73) Patentinhaber: Bayerische Motoren Werke Aktiengesellschaft, 80788 München (DE); A. Kayser Automotive Systems GmbH, 37574 Einbeck (DE)
(72) Erfinder: HUEMER, Gerhart, D-81679 München (DE); LEMBERGER, Heinz, D-85774 Unterföhring (DE); BODE, Henning, D-37574 Einbeck (DE)
(86) Internationale Anmeldenummer: EP9803852
(87) Internationale Veröffentlichungsnummer: WO9901306

(56) Entgegenhaltungen:
- EP-A- 0 174 800
- EP-A- 0 302 264
- DE-A- 19 627 655
- DE-B- 1 172 918
- FR-A- 2 666 136
- US-A- 2 509 504
- US-A- 5 271 559

## Beschreibung

Die Erfindung bezieht sich auf eine in einem Nebenstrom angeordnete Ventilvorrichtung für einen im Nebenstrom angeordneten Wärmetauscher in einem Kühlkreislauf, insbesondere einer Brennkraftmaschine.

Eine derartige Ventilvorrichtung ist beispielsweise aus der DE 196 27 655 A für eine Heizvorrichtung für ein Fahrzeug bekannt. Die gattungsgemäße Ventilvorrichtung ist in einem Bypass von Heiz-Wärmetauschern angeordnet zu dem Zweck, den Heißwasser-Zulaufdruck bei jedem Wärmetauscher auf einem konstanten Level zu halten. Weiter weist der in der Ventilvorrichtung verwendete Ventilkörper einen Drosseldurchgang auf mit dem Ziel, bei geschlossenem Ventilkörper im Bypass einen Heißwasserumlauf aufrechtzuerhalten.

Eine weitere Ventilvorrichtung gemäß dem Oberbegriff des Patentanspruches 1 ist aus der EP-A 0 302 264 bekannt. Mit dem Gegenstand dieser Entgegenhaltung soll insbesondere im Leerlauf der Brennkraftmaschine im stromab angeordneten Wärmetauscher eine maximale Wärmeübertragung stattfinden. Erreicht ist dies dadurch, daß der Kühlmitteldurchsatz im Leerlauf der Brennkraftmaschine fast nicht gedrosselt ist. Weitere Angaben bei höheren Pumpendrücken sind nicht angegeben.

Der Erfindung liegt die Aufgabe zugrunde, die gattungsgemäße Ventilvorrichtung dahin weiterzubilden, daß der Zulauf- bzw. Förderdruck mit Erreichen eines die maximale Wärmeübertragung im Wärmetauscher bewirkenden Kühlmitteldurchsatzes begrenzt ist bei weiter durchströmten Wärmetauscher, und daß mit dieser durchflußgeregelten Druckbeanspruchung eine förderabhängig wirksame Sicherheitseinrichtung kombiniert ist.

Diese Aufgabe ist mit dem Patentanspruch 1 gelöst. Bei sogenannten Thermo-Management-Systemen mit gesonderten Wärmetauschem für Aufheizen und Kühlen kann mit der erfindungsgemäßen Ventilvorrichtung in vorteilhafter Weise der Durchfluß durch den jeweiligen Wärmetauscher entsprechend dessen maximal notwendigen Kühlmitteldurchsatzes für eine optimale Wärmeübertragung stufenlos begrenzt werden, wobei mit dieser für jeden gesonderten Wärmetauscher im Nebenstrom individuellen Druckbegrenzung im weiteren in vorteilhafter Weise sichergestellt ist, daß jeder Wärmetauscher maximal nur den für die optimale Wärmeübertragung erforderlichen Kühlmitteldurchsatz aufweist und somit alle im Kühlkreislauf angeordneten Wärmetauscher entsprechend ihrer Auslegung mit der erforderlichen maximalen Kühlmittelmenge bei druckbegrenzend geschlossenem Ventilkörper versorgt sind. Damit steht der Brennkraftmaschine selbst, insbesondere bei parallel im Kühlmittelkreislauf geschalteten Wärmetauschern und auch weiteren im Kreislauf befindlichen Wärmetauschern, mehr Kühlmittel für die eigene Erwärmung bzw. Kühlung zur Verfügung. Mit dieser auf den Kühlmitteldurchsatz für eine maximale Wärmeübertragung erfindungsgemäß abgestellte Druckbegrenzung mit einem über den Drosseldurchgang entsprechend der jeweiligen Drosselkennlinie des betreffenden Wärmetauschers bestimmten Kühlmitteldurchsatz ist bei weiter gesteigertem Kühlmitteldurchsatz im Kühlkreislauf der Wärmetauscher von einer weiteren Drucksteigerung verschont und somit dessen Betriebssicherheit erhöht.

Die erfindungsgemäße Ventilvorrichtung dient neben der über eine Durchflußregelung erzielten Druckbegrenzung zusätzlich als ein erstes, per se z.B. aus der DE-B 1 172 918 bekanntes Rohr- bzw. Schlauchbruch-Ventil, dessen Durchfluß-Absperrfunktion bei einem Kraftfahrzeug mit flüssigkeitsgekühlter Antriebsmaschine mit in deren Kühlkreislauf zu unterschiedlichen Zwecken in Nebenströmen eingebundenen Wärmetauschern bei einem Rohr- bzw. Schlauchbruch den betreffenden Nebenstromkreis vom übrigen Kühlkreislauf abtrennt, wobei das Fahrzeug vorteilhafterweise weiter betriebsfähig bleibt.

In einer ersten Ausgestaltung der Erfindung wird die Ventilvorrichtung mit einem Rohr- bzw. Schlauchbruch-Ventil derart ausgerüstet, daß der mit dem Drosseldurchgang ausgebildete Ventilkörper gleitbeweglich angeordnet ist in einer den Ventilsitz aufweisenden Schiebehülse, die in dem Gehäuse zwischen Rohr- bzw. Schlauchstutzen bei am Ventilsitz im wesentlichen dicht anliegendem Ventilkörper förderdruckabhängig gegen eine Druckfeder in dichtem Anschlag mit dem Gehäuse gebracht ist, wobei mit der durch einen Rohr- bzw. Schlauchbruch förderdruckseitig ausgelösten weiteren Anschlagbewegung der Schiebehülse ein stromab im Rohr- bzw. Schlauchstutzen ortsfest angeordnetes elastisches Element den Drosseldurchgang verschließt.

Zur Aufrechterhaltung der Funktion eines Rohr- bzw. Schlauchbruch-Ventils insbesondere bei geringem Förderdruck bzw. Kühlmitteldurchsatz wird in weiterer Ausgestaltung vorgeschlagen, daß mit dem Verschließen des Drosseldurchganges eine den Ventilkörper und die Schiebehülse jeweils in dichter Schließstellung haltende Fixiereinrichtung in Wirkung tritt.

Mit dem vorbeschriebenen, erfindungsgemäß weitergebildeten Sicherheitsventil ist sichergestellt, daß bei einem Leitungsbruch stromab der Ventilvorrichtung im Nebenstromverlauf ein weiterer Austritt bzw. Verlust an Kühlmittel aus dem üblicherweise mit einer Umwälzpumpe ausgestatteten Kühlkreislauf vermieden ist in Verbindung mit einem im Nebenstromrücklauf als Rohr- bzw. Schlauchbruchventil dienenden Rückschlagventil. Somit bleibt insbesondere ein Kühlkreis einer Brennkraftmaschine weiter funktionsfähig, mit Ausnahme des durch einen gebrochenen Leitungsabschnitt abgetrennten Wärmetauschers.

In einer von der vorbeschriebenen Ventilvorrichtung abweichend gestalteten Ausführung eines kombinierten Druckbegrenzungs- und Sicherheitsventils wird vorgeschlagen, daß in einem Gehäuse eine eine Rücklaufkammer von einer eine Ventilöffnung aufweisenden Trennwand unterteilten Vorlaufkammer trennende Membrane mit einem die Ventilöffnung abströmseitig steuernden Ventilkörper mit Drosseldurchgängen und einem die Ventilöffnung bei einem Rohr- bzw. Schlauchbruch zuströmseitig verschließenden Ventilteller in Antriebsverbindung steht, und daß in einem wärmetauscherseitigen Rücklaufstutzen des Gehäuses ein Rückschlagventil angeordnet ist.

Eine dritte erfindungsgemäße Ventilvorrichtung ist vorteilhaft einfach derart gestaltet, daß der Ventilkörper selbst bei einem Leitungsbruch als Rohr- bzw. Schlauchbruch-ventil wirkt und somit im Nebenstrom in der anderen Leitung lediglich ein gesondertes Rohr- bzw. Schlauchbruchventil erforderlich ist.

Mit der im Bauaufwand und Bauraum vorteilhaft erstbeschriebenen Ausführung der Ventilvorrichtung ist zur Erzielung der Sicherheitsfunktion bei einem Rohr- bzw. Schlauchbruch ein entsprechender Förderdruck im Kühlkreislauf erforderlich, wobei bei der etwas bauaufwendigeren zweiten Ausgestaltung der Ventilvorrichtung die Sicherheitsfunktion durch eine rücklaufkammerseitig auf die Membran einwirkende Schließfeder sichergestellt ist.

In weiteren Unteransprüchen sind zusätzliche vorteilhafte Ausgestaltungen der Erfindung beschrieben.

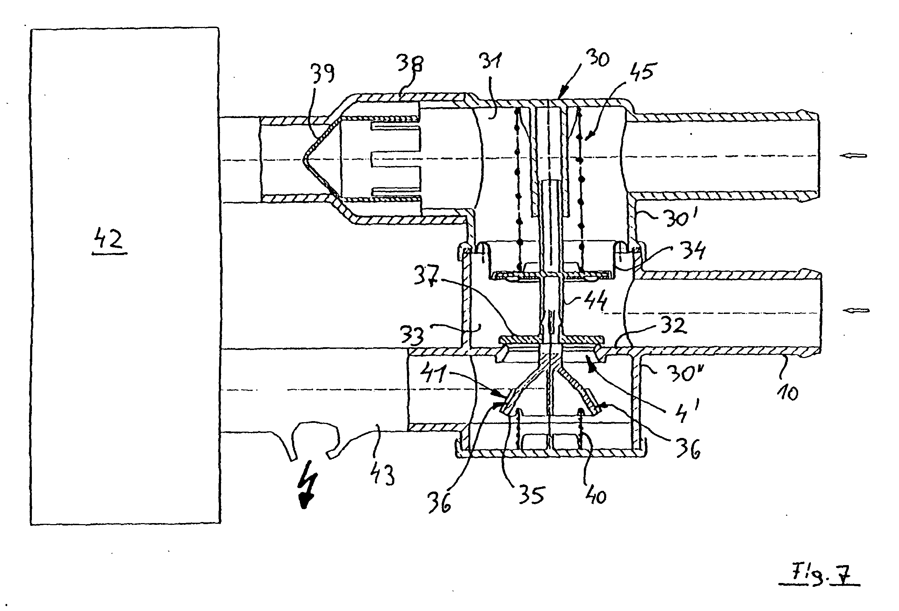

Die Erfindung ist anhand zweier in der Zeichnung dargestellter, bevorzugter Ausführungsbeispiele beschrieben. Es zeigen
- Figuren 1 bis 3: eine erste erfindungsgemäße Ventilvorrichtung in Aufbau und Funktionsweise, vorzugsweise angeordnet in einem Nebenstrom-Verlauf,
- Figur 4: eine hinsichtlich der Fixiereinrichtung abgewandelte erste Ventilvorrichtung,
- Figur 5: eine weitere Variante der ersten Ventilvorrichtung in vereinfachtem Aufbau,
- Figur 6: eine zweite erfindungsgemäße Ventilvorrichtung mit einem über eine Membrane gesteuerten Ventilkörper, im Betrieb gezeigt, und
- Figur 7: die zweite Ventilvorrichtung in der Funktion als Sicherheitsventil bei einem Rohr- bzw. Schlauchbruch,
- Figur 8: eine dritte erfindungsgemäße Ventilvorrichtung im Nebenstrom-Rücklauf.

Ein erstes Ausführungsbeispiel einer Ventilvorrichtung 1 für einen nicht gezeigte, gesonderte Wärmetauscher umfassenden Kühlkreis einer nicht dargestellten Brennkraftmaschine umfaßt in einem Gehäuse 2 einen förderdruckabhängig gegen den Widerstand einer Rückstellfeder 3 relativ zu einem einen Leitungsquerschnitt 4 begrenzenden Ventilsitz 5 gesteuerten Ventilkörper 6 sowie einen Drosseldurchgang 7.

Um aufgabengemäß den Zulauf bzw. Förderdruck auf einen mit Erreichen eines die maximale Wärmeübertragung im jeweiligen Wärmetauscher bewirkenden Kühlmitteldurchsatzes entsprechenden Wert zu begrenzen bei gleichzeitiger Aufrechterhaltung des für die maximale Wärmeübertragung gegebenen Kühlmitteldurchsatzes ist erfindungsgemäß der Ventilkörper 6 mit Erreichen des Kühlmitteldurchsatzes für eine maximale Wärmeübertragung im jeweils stromab angeordneten Wärmetauscher förderdruckabhängig in Schließstellung mit dem Ventilsitz 5 gesteuert, wobei der vorgesehene Drosseldurchgang 7 einen Querschnitt 4 aufweist, über den ein der maximalen Wärmeübertragung im wesentlichen entsprechender Kühlmitteldurchsatz aufrechterhalten ist.

Die Ventilvorrichtung 1 wirkt in dem vorbeschriebenen Umfang als Durchflußregelventil mit gesteuerter Druckbegrenzung für einen stromab angeordneten Wärmetauscher, dessen Beaufschlagung über die maximale Wärmeübertragung hinaus vorteilhaft reduziert ist, verbunden mit einer vorteilhaften Druckentlastung des Wärmetauschers mit höherer Betriebssicherheit bei größerer Lebensdauer. Weiter bietet die erfindungsgemäße Ventilvorrichtung 1 bei mehreren Wärmetauschern im Kühlkreislauf der Brennkraftmaschine eine bedarfsorientierte Aufteilung der Kühlmittelströme.

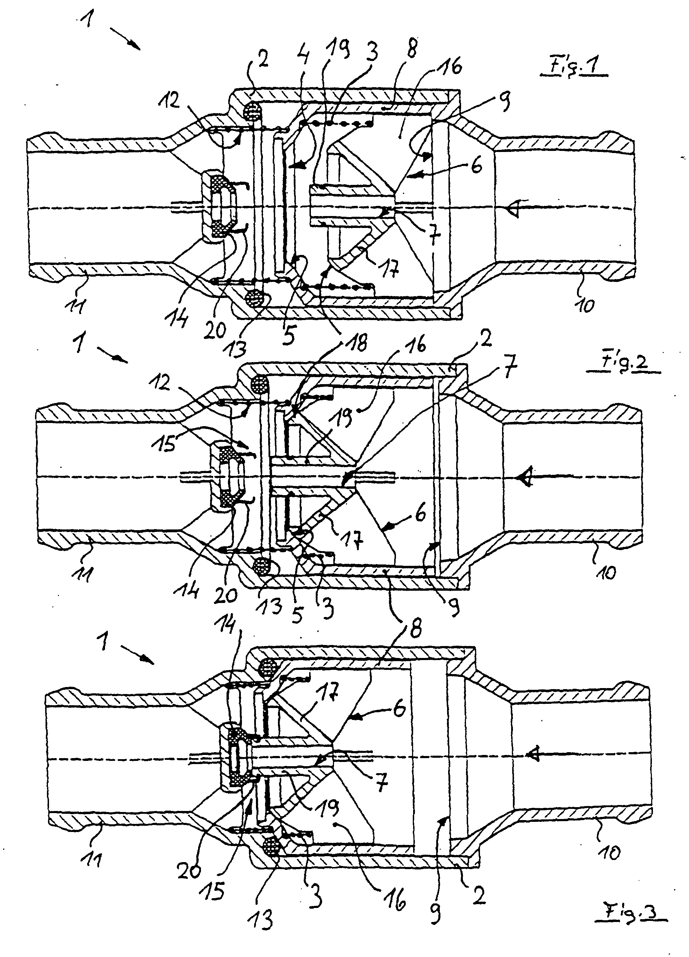

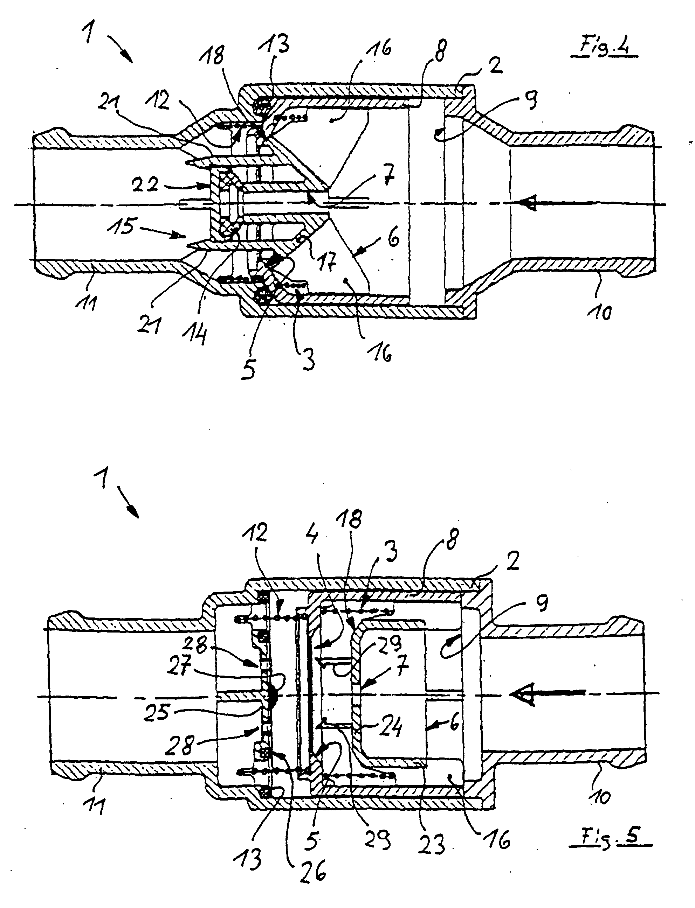

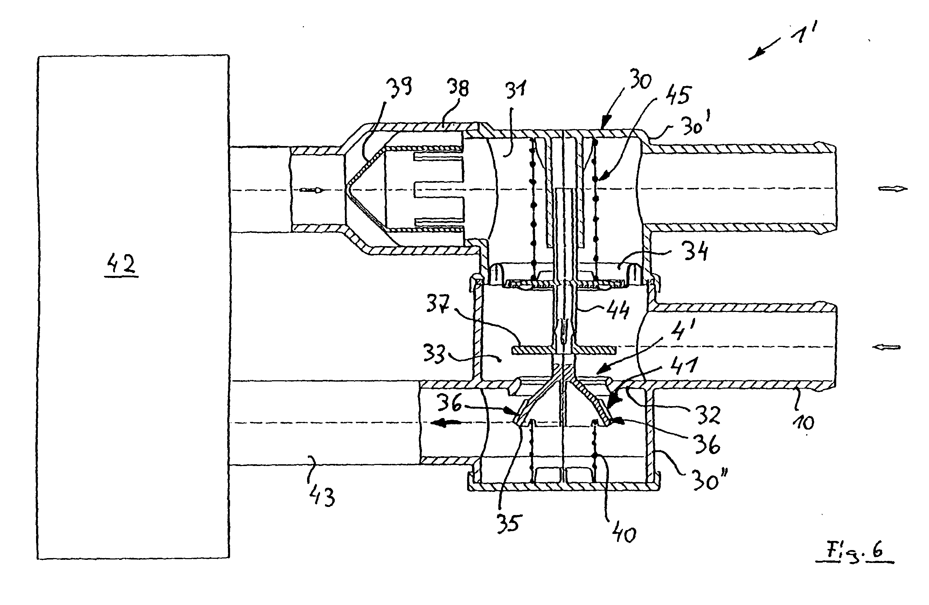

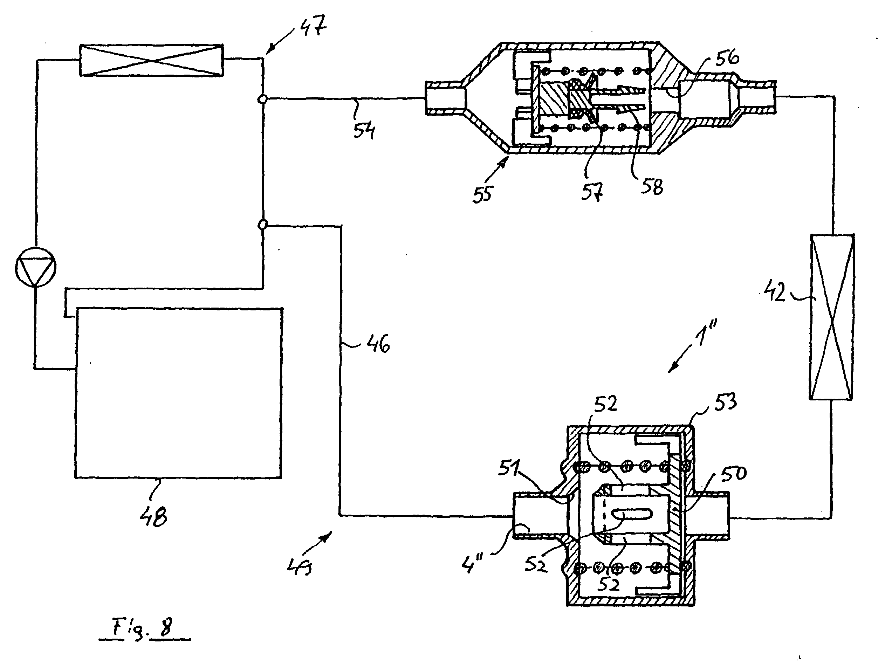

Wie aus den Figuren 1 mit 3 weiter ersichtlich, ist der mit dem Drosseldurchgang 7 ausgebildete und als Teil eines Rohr- bzw. Schlauchbruchventils dienende Ventilkörper 6 gleitbeweglich angeordnet in einer den Ventilsitz 5 aufweisenden Schiebehülse 8, die in dem Gehäuse 2 zwischen Rohr- bzw. Schlauchstutzen 10, 11 bei am Ventilsitz 5 im wesentlichen dicht anliegendem Ventilkörper 6 förderdruckabhängig gegen eine Druckfeder 12 in dichtem Anschlag gegen einen Dichtring 13 gemäß Figur 3 mit dem Gehäuse 2 gebracht ist, wobei mit der Anschlagbewegung der Schiebehülse 8 ein stromab im Rohr- bzw. Schlauchstutzen 11 ortsfest angeordnetes elastisches Element 14 den Drosseldurchgang 7 verschließt. Weiter ist aus der Figur 3 ersichtlich, daß mit dem Verschließen des Drosseldurchganges 7 eine den Ventilkörper 6 und die Schiebehülse 8 jeweils in dichter Schließstellung haltende Fixiereinrichtung 15 in Wirkung tritt.

Mit der erfindungsgemäßen Weiterbildung der der Druckbegrenzung dienenden Ventilvorrichtung 1 ist in vorteilhafter Weise zusätzlich die Sicherheitsfunktion eines Schlauch- bzw. Rohrbruch-Ventils erzielt. Bei einer Beschädigung einer Verbindungsleitung im Verlauf des Nebenstroms stromab der Ventilvorrichtung 1 zu einem Wärmetauscher ist damit eine weitere Kühlmittelzufuhr zu diesem Wärmetauscher unterbunden, wobei ein weiterer Kühlmittelverlust aus dem Kühlkreislauf über den intakten Rücklauf des Nebenstromes mittels eines weiteren Rohr- bzw. Schlauchbruchventils vermieden ist, das in baulich einfacher Weise bevorzugt als Rückschlagventil gestaltet ist, wie dies z.B. mit dem Rückschlagventil 39 der VentilVorrichtung 1' in den Figuren 6 und 7 gezeigt ist. Mit der in diesem Fall als Rohr- bzw. Schlauchbruch-Ventil wirksamen Ventilvorrichtung 1 ist ein Leerlaufen des Kühlkreislaufes unterbunden, so daß der Kühlkreislauf mit den übrigen ordnungsgemäß angeschlossenen Wärmetauschern, einschließlich der Brennkraftmaschine, voll in Funktion bleibt. Weiter ist mit dieser Ventilvorrichtung 1 sichergestellt, daß je nach Anordnung eines schadhaften Wärmetauschers oder einer schadhaften Verbindungsleitung lediglich der Inhalt dieses Wärmetauschers sich gegebenenfalls im Fahrzeuginnenraum ausbreiten kann.

Wie aus den Figuren 1 mit 3 weiter ersichtlich, weist der förderdruckabhängig zur Durchflußregelung verstellbare Ventilkörper 6 zur Regelung des Kühlmitteldurchsatzes in einem stromab angeschlossenen Wärmetauscher einen zuströmseitig konischen und über verteilt angeordnete Flügel 16 in der Schiebehülse 8 gleitbeweglich geführten Verschlußkörper 17 mit einem Dichtsitz 18 auf, wobei der in seinem Drosselquerschnitt auf die Drosselkennlinie des nachgeschalteten Wärmetauschers abgestellte Drosseidurchgang 7 in einem abströmseitig vorgesehenen, in Schließstellung von Ventilkörper 6 und Schiebehülse 8 über den Ventilsitz 5 hinausragenden Fortsatz 19 angeordnet ist, der mit Raststellen für Rastzungen 20 der Fixiereinrichtung 15 ausgebildet ist. Mit dieser Fixiereinrichtung 15 ist sichergestellt, daß die Ventilvorrichtung 1 auch bei geringem oder stark schwankendem Förderdruck im Kühlkreislauf einwandfei dicht gehalten ist.

Eine erste Abwandlung der den Kühlmitteldurchsatz bzw. den Kühlmitteldurchfluß für einen benachbarten Wärmetauscher regelnden Ventilvorrichtung 1 ist in Figur 4 aufgezeigt, wobei identische Bauteile mit gleichen Bezugsziffern belegt sind. Die in der Funktion eines Sicherheitsventils mit totaler Sperrung des Kühlmittelszuflußes zum benachbarten Wärmetauscher in der Figur 4 dargestellte Ventilvorrichtung 1 unterscheidet sich von der Ventilvorrichtung 1 der Figuren 1 mit 3 durch eine abgewandelte Fixiereinrichtung 15. Diese umfaßt am Ventilkörper 6 angeordnete elastische Rastbügel 21, die mit einer das Verschluß-Element 14 tragenden Stützplatte 22 im abströmseitigen Rohr- bzw. Schlauchstutzen 11 zur Fixierung von Ventilkörper 6 und Schiebehülse 8 zusammenwirken.

Bei der in Figur 5 gezeigten zweiten Abwandlung der Ventilvorrichtung 1 sind wiederum identische Bauteile mit gleichen Bezugsziffern belegt. Bei dieser Ventilvorrichtung 1 weist der Ventilkörper 6 einen zuströmseitig topfförmig gestalteten und über verteilt angeordnete Flügel 16 in der Schiebehülse 8 gleitbeweglich geführten Verschlußkörper 23 mit einem im Boden 24 angeordneten Drosseldurchgang 7 auf, dem auf einer abströmseitig angeordneten Platte 25 mit einem von der Schiebehülse 8 beaufschlagten Dichtring 26 ein vorspringend gestaltetes Verschluß-Element 27 zugeordnet ist, und ferner die Platte 25 mit Durchbrechungen 28 versehen ist zum Durchgriff von am Ventilkörper 6 angeordneten Rasthaken 29.

Jede der in den Figuren 1 mit 5 gezeigten Fixiereinrichtungen 15 ist jeweils so gestaltet, daß Ventilkörper 6 und Schiebehülse 8 im Reparaturfall einer schadhaften Verbindungsleitung zwischen Ventilvorrichtung 1 und zugeordnetem Wärmetauscher leicht von Hand gelöst werden können.

Die in den Figuren 6 und 7 gezeigte Ventilvorrichtung 1' mit den kombinierten Funktionen einer über eine Durchflußregelung bewirkten Druckbegrenzung und eines Sicherheitsventils bei Schlauch- bzw. Rohrbruch umfaßt ein Gehäuse 30 mit einer Rücklaufkammer 31, die von einer eine Ventilöffnung 4' aufweisenden Trennwand 32 unterteilten Vorlaufkammer 33 durch eine Membrane 34 getrennt ist, die mit einem die Ventilöffnung 4' abströmseitig steuernden Ventilkörper 35 mit Drosseldurchgängen 36 und einem die Ventilöffnung 4' bei einem Rohr- bzw. Schlauchbruch zuströmseitig verschließenden Ventilteller 37 in Antriebsverbindung steht. Weiter weist die Ventilvorrichtung 1' in einem wärmetauscherseitigen Rücklaufstutzen 38 des Gehäuses 30 ein Rückschlagventil 39 auf.

Die zwischen Gehäusehälften 30' und 30" eingespannt und rücklaufkammerseitig geführt angeordnete Membrane 34 steuert förderdruckabhängig mit Unterstützung einer am Ventilkörper 35 angreifenden Druckfeder 40 den Ventilkörper 35 mit in seinem Dichtsitz 41 ausgebildeten Drosseldurchgängen 36 ebenfalls derart, daß der Ventilkörper 35 mit Erreichen eines Kühlmitteldurchsatzes für eine maximale Wärmeübertragung im stromab angeordneten Wärmetauscher 42 förderdruckabhängig in Schließstellung mit der Ventilöffnung 4' gesteuert ist, wobei die vorgesehenen Drosseldurchgänge 36 einen Gesamtquerschnitt aufweisen, über den ein der maximalen Wärmeübertragung im wesentlichen entsprechender Kühlmitteldurchsatz aufrechterhalten bleibt.

Weiter ist die erfindungsgemäße Ventilvorrichtung 1' derart gestaltet, daß bei einem wie in Figur 7 für den Wärmetauschervorlauf 43 angedeuteten Rohr- bzw. Schlauchbruch mit im Rücklauf 38 geschlossenem Rückschlagventil 39 der an einem Ventilschaft 44 des Ventilkörpers 35 angeordnete Ventilteller 37 über eine rücklaufkammerseitig auf die Membrane 34 einwirkende Schließfeder 45 gegen die ventilkörperseitige Druckfeder 40 in Schließstellung der Ventilöffnung 4' gesteuert ist.

Aus der US-A 2 509 504 ist zwar ein Rohrbruchventil für einen Ölkühler mit zwei auf einer Führungshülse fest beabstandeten Ventilelementen bekannt, deren Verstellbewegungen hydraulisch über einen von druckbeaufschlagten Membranen gesteuerten, stangenartigen Schieber veranlaßt sind, auf dem die Führungshülse mit den Ventilelementen verschiebbar angeordnet ist. Demgegenüber ist die erfindungsgemäße Ventilvorrichtung 1' wesentlich einfacher gestaltet mit einer die fest beabstandeten Ventilelemente 35 und 37 direkt über den Ventilschaft 44 steuernden Anordnung.

Bei einer dritten, im Aufbau vorteilhaft einfachen Ventilvorrichtung 1" ist diese in einem Rücklauf 46 eines mit dem Kühlkreislauf 47 einer Brennkraftmaschine 48 verbundenen Nebenstroms 49 angeordnet. Diese Ventilvorrichtung 1" umfaßt einen Ventilkörper 50, der einerseits förderdruckabhängig in Schließstellung mit dem Ventilsitz 51 gesteuert Drosseldurchgänge 52 in Wirkung bringt und der andererseits bei einem Rohr- bzw. Schlauchbruch stromauf der Ventilvorrichtung 1" federkraftgesteuert in eine als Rohr- bzw. Schlauchbruchventil dienende Schließstellung - entspricht im übrigen der in Figur 8 gezeigten Ausgangsstellung - mit dem Gehäuse 53 dicht zusammenwirkt, wobei hierbei ein weiteres, im Vorlauf 54 des Nebenstroms 49 angeordnetes Rohr- bzw. Schlauchbruchventil 55 einen Durchlaß 56 förderdruckabhängig gesteuert verschließt über eine elastische Lippendichtung 57 im Stirnrandbereich des Durchflusses 56, in den das Rohr- bzw. Schlauchbruchventil 55 fixierende Rastzungen 58 eingreifen. Bei dieser Ausgestaltung bildet der federbelastete Ventilkörper 50 selbst das Rohr- bzw. Schlauchbruchventil, das in Verbindung mit dem im Vorlauf 54 angeordneten weiteren Rohr- bzw. Schlauchbruchventil 55 bei einer Beschädigung des Vorlaufes 54 stromauf des Wärmetauschers 42 bzw. einer Beschädigung der Leitung des Rücklaufes 46 stromab des Wärmetauschers 42 einen Kühlmittelverlust im Kühlkreislauf 47 der Brennkraftmaschine 48 weitestgehend unterbindet.

## Patentansprüche

1. In einem Nebenstrom angeordnete Ventilvorrichtung für einen im Nebenstrom angeordneten Wärmetauscher in einem Kühlkreislauf, insbesondere einer Brennkraftmaschine,
- umfassend in einem Gehäuse (2, 30, 53) der Ventilvorrichtung (1, 1', 1") einen förderdruckabhängig gegen den Widerstand einer Rückstellfeder (3, 45) relativ zu einem einen Leitungsquerschnitt (4, 4', 4") begrenzenden Ventilsitz (5, 51) gesteuerten Ventilkörper (6, 35, 50) mit einem zur durchflußgeregelten Druckbegrenzung dienenden Drosseldurchgang (7, 36, 52), **dadurch gekennzeichnet, daß**
- der Ventilkörper (6, 35, 50) mit Erreichen eines Kühlmitteldurchsatzes für eine maximale Wärmeübertragung im zugeordneten Wärmetauscher (42) förderdruckabhängig in Schließstellung mit dem Ventilsitz (5, 51) gesteuert ist und der Drosseldurchgang (7, 36, 52) einen auf diese maximale Wärmeübertragung abgestimmten Querschnitt aufweist, und
- daß die Ventilvorrichtung (1, 1', 1") mit einem Rohr- bzw. Schlauchbruchventil (55) kombiniert ist, das
- bei einem Rohr- bzw. Schlauchbruch im Nebenstrom des Wärmetauschers (42) den Kühlmittel-Durchlaß mittels eines weiteren Verschlußelementes (14, 27, 37, 57) unterbindet.

2. Ventilvorrichtung nach Anspruch 1, **dadurch gekennzeichnet,**
- **daß** ein mit dem Drosseldurchgang (7) ausgebildeter Ventilkörper (6) gleitbeweglich angeordnet ist in einer den Ventilsitz (5) aufweisenden Schiebehülse (8), die
- in dem Gehäuse (2) zwischen Rohr- bzw. Schlauchstutzen (10, 11) bei am Ventilsitz (5) im wesentlichen dicht anliegendem Ventilkörper (6) förderdruckabhängig bei einem Rohr- bzw. Schlauchbruch gegen eine Druckfeder (12) in dichtem Anschlag (Dichtring 13) mit dem Gehäuse (2) gebracht ist, wobei
- mit der Anschlagbewegung der Schiebehülse (8) ein stromab im Rohr- bzw. Schlauchstutzen (11) ortsfest angeordnetes elastisches Element (14) den Drosseldurchgang (7) verschließt.

3. Ventilvorrichtung nach Anspruch 1 und 2, **dadurch gekennzeichnet, daß** mit dem Verschließen des Drosseldurchganges (7) eine den Ventilkörper (6) und die Schiebehülse (8) jeweils in dichter Schließstellung haltende Fixiereinrichtung (15) in Wirkung tritt.

4. Ventilvorrichtung nach den Ansprüchen 1 bis 3, **dadurch gekennzeichnet,**
- **daß** der Ventilkörper (6) einen zuströmseitig konischen und über verteilt angeordnete Flügel (16) in der Schiebehülse (8) gleitbeweglich geführten Verschlußkörper (17) mit einem Dichtsitz (18) aufweist, und
- **daß** der Drosseldurchgang (7) in einem abströmseitig vorgesehenen, in Schließstellung von Ventilkörper (6) und Schiebehülse (8) über den Ventilsitz (5) hinausragenden Fortsatz (19) angeordnet ist, der
- mit Raststellen für Rastzungen (20) der Fixiereinrichtung (15) ausgebildet ist (Figuren 1 bis 3).

5. Ventilvorrichtung nach den Ansprüchen 1 bis 3, **dadurch gekennzeichnet,**
- **daß** der Ventilkörper (6) einen zuströmseitig konischen und über verteilt angeordnete Flügel (16) in der Schiebehülse (8) gleitbeweglich geführten Verschlußkörper (17) mit einem Dichtsitz (18) aufweist, und
- der Drosseldurchgang (7) in einem abströmseitig vorgesehenen, in Schließstellung von Ventilkörper (6) und Schiebehülse (8) über den Ventilsitz (5) hinausragenden Fortsatz (19) zum dichten Anliegen am elastischen Verschluß-Element (14) angeordnet ist, wobei
- am Ventilkörper (6) angeordnete elastische Rastbügel (21) mit einer das Verschluß-Element (14) tragenden Stützplatte (22) zur Fixierung zusammenwirken (Figur 4).

6. Ventilvorrichtung nach den Ansprüchen 1 bis 3, **dadurch gekennzeichnet,**
- **daß** der Ventilkörper (6) einen zuströmseitig topfförmig gestalteten und über verteilt angeordnete Flügel (16) in der Schiebehülse (8) gleitbeweglich geführten Verschlußkörper (23) mit einem in Boden (24) angeordneten Drosseldurchgang (7) aufweist, dem
- auf einer abströmseitig angeordneten Platte (25) mit einem von der Schiebehülse (8) beaufschlagten Dichtring (26) ein vorspringend gestaltetes Verschluß-Element (27) zugeordnet ist, und ferner
- die Platte (25) mit Durchbrechungen (28) versehen ist zum Durchgriff von am Ventilkörper (6) angeordneten Rasthaken (29) (Figur 5).

7. Ventilvorrichtung nach den Ansprüchen 1 bis 6, **dadurch gekennzeichnet, daß** im Rücklauf des Nebenstromes des Wärmetauschers (42) als Rohr- bzw. Schlauchbruchventil ein Rückschlagventil (39) angeordnet ist.

8. Ventilvorrichtung nach Anspruch 1, **dadurch gekennzeichnet,**
- **daß** in einem Gehäuse (30) eine eine Rücklaufkammer (31) von einer eine Ventilöffnung (4') aufweisenden Trennwand (32) unterteilten Vorlaufkammer (33) trennende Membrane (34) mit einem die Ventilöffnung (4') abströmseitig steuernden Ventilkörper (35) mit Drosseldurchgängen (36) und einem die Ventilöffnung (4') bei einem Rohr- bzw. Schlauchbruch zuströmseitig verschließenden Ventilteller (37) in Antriebsverbindung steht, und
- **daß** in einem wärmetauscherseitigen Rücklaufstutzen (38) des Gehäuses (30) ein Rückschlagventil (39) angeordnet ist (Figur 6, 7).

9. Ventilvorrichtung nach Anspruch 8, **dadurch gekennzeichnet,**
- **daß** die zwischen Gehäuseteilen (30', 30") eingespannt und rücklaufkammerseitig geführt angeordnete Membrane (34) förderdruckabhängig mit Unterstützung einer am Ventilkörper (35) angreifenden Druckfeder (40) den Ventilkörper (35) mit im Dichtsitz (41) ausgebildeten Drosseldurchgängen (36) steuert, und
- **daß** bei einem Rohr- bzw. Schlauchbruch mit im Rücklauf (38) geschlossenem Rückschlagventil (39) der an einem Ventilschaft (44) des Ventilkörpers (35) angeordnete Ventilteller (37) über eine rücklaufkammerseitig auf die Membrane (34) einwirkende Schließfeder (45) gegen die ventilkörperseitige Druckfeder (40) in Schließstellung der Ventilöffnung (31) gesteuert ist.

10. Ventilvorrichtung nach Anspruch 1, **dadurch gekennzeichnet,**
- **daß** in einem Rücklauf (46) eines mit dem Kühlkreislauf (47) einer Brennkraftmaschine (48) verbundenen Nebenstroms (49) eine Ventilvorrichtung (1") angeordnet ist, dessen
- Ventilkörper (50) einerseits förderdruckabhängig in Schließstellung mit dem Ventilsitz (51) gesteuert Drosseldurchgänge (52) in Wirkung bringt und der
- andererseits bei einem Rohr- bzw. Schlauchbruch stromauf der Ventilvorrichtung (1") federkraftgesteuert in eine als Rohr- bzw. Schlauchbruchventil dienende Schließstellung gebracht mit dem Gehäuse (53) dicht zusammenwirkt, wobei hierbei
- ein weiteres, im Vorlauf (54) des Nebenstroms (49) angeordnetes Rohr- bzw. Schlauchbruchventil (55) einen Durchfluß (56) förderdruckabhängig gesteuert verschließt über eine elastische Lippendichtung (57) im Stirnrandbereich des Durchflusses (56), in den
- das Rohr- bzw. Schlauchbruchventil (55) fixierende Rastzungen (58) eingreifen.

## Claims

1. A valve arrangement arranged in a by-pass for a heat exchanger arranged in a by-pass in a cooling circuit, especially of an internal combustion engine,
- comprising in a casing (2, 30, 53) the valve arrangement (1, 1', 1") a valve body (6, 35, 50) controlled relative to a valve seat (5, 51) limiting a line cross section (4, 4', 4") with a throttle aperture (7, 36, 52) serving for through flow regulated pressure limiting, **characterised in that**
- the valve body (6, 35, 50) is controlled depending on the supply pressure into the closed position with the valve seat (5, 51) when a cooling medium throughput for maximum heat transfer in the associated heat exchanger (42) is reached and the throttle aperture (7, 36, 52) has a cross section adapted to this maximum heat transfer, and
- that the valve arrangement (1, 1', 1") is combined with a pipe or hose break valve (55), which
- in the event of a pipe or hose break in the by-pass flow of the heat exchanger (42) prevents the escape of cooling medium by means of a further closing element (14, 27, 37, 57).

2. A valve arrangement according to Claim 1, **characterised in that**,
- a valve body (6) formed with the throttle aperture (7) is arranged to be able to slide in a sliding sleeve (8) having the valve seat (5), which sleeve
- in the casing (2) between pipe or hose connectors (10, 11) with the valve body (6) essentially tightly abutting the valve seat (5) is brought depending on supply pressure in the event of a pipe or hose break against a compression spring (12) into tight abutment (sealing ring 13) with the casing (2), whereby
- with the abutting movement of the sliding sleeve (8) a fixed elastic element (14) arranged downstream in the pipe or hose connector (11) closes the throttle aperture (7).

3. A valve arrangement according to Claim 1 and Claim 2, **characterised in that** with the closing of the throttle aperture (7) a retaining device (15) comes into operation holding the valve body (6) and the sliding sleeve (8) in a tightly closed position.

4. A valve arrangement according to Claims 1 to 3, **characterised in that**,
- the valve body (6) has a sliding closing body (17), conical on the feed side with a sealing seat (18), guided in the sliding sleeve (8) by wings (16) arranged in a distribution and that
- the throttle aperture (7) is arranged in a protrusion (19) provided on the upstream side extending out from the valve seat (5) in the closed position of the valve body (6) and the sliding sleeve (8), which
- is formed with indexing positions for indexing tongues (20) of the retaining device (15) (Figures 1 to 3).

5. A valve arrangement according to Claims 1 to 3, **characterised in that**
- the valve body (6) has a sliding closing body (17), conical on the feed side with a sealing seat (18), guided in the sliding sleeve (8) by wings (16) arranged in a distribution, and
- the throttle aperture (7) is arranged in a protrusion (19) provided on the upstream side extending out from the valve seat (5) in the closed position of the valve body (6) and the sliding sleeve (8) for tight abutment on the elastic closing element (14) whereby
- elastic indexing stirrups (21) arranged on the valve body (6) work together with a support plate (22) carrying the closing element (14) for retention (Figure 4).

6. A valve arrangement according to Claims 1 to 3, **characterised in that**
- the valve body (6) has a closing body (23), pot-shaped on the feed side and guided by spaced wings (16) to be able to slide in the sliding sleeve (8) with a throttle aperture (7) arranged in the base (24), with which
- a protruding shaped closing element (27) is associated on a plate (25) arranged on the downstream side with a sealing ring (26) impacted by the sliding sleeve (8), and further
- the plate (25) is provided with penetrations (28) for the indexing hooks (29) arranged on the valve body (6) to grip through (Figure 5).

7. A valve arrangement according to Claims 1 to 6, **characterised in that** a non-return valve (39) is arranged in the return flow of the by-pass flow of the heat exchanger (42) as a pipe or hose break valve.

8. A valve arrangement according to Claim 1, **characterised in that**,
- in a casing (30) a membrane (34) separating a return flow chamber (31) from a divided supply chamber (33), which has a separating wall (32) having a valve opening (4') is in actuating connection with a valve body (35) controlling the valve opening (4') on the downstream side with throttle apertures (36) and a valve disc (37) closing the valve opening (4') on the supply side in the event of a pipe or hose break, and
- that a non-return valve (39) is arranged in a heat exchanger side return flow pipe connection (38) of the casing (30) (Figure 6, 7).

9. A valve arrangement according to Claim 8, **characterised in that**,
- the membrane (34) stretched between the casing halves (30', 30") arranged on the return chamber side controls the valve body (35) with throttle apertures (36) formed in its seat (41) in dependency on feed pressure with support from a compression spring (40) engaging on the valve body (35), and
- that in the event of a pipe or hose break with the non-return valve (39) closed in the return flow (38) the valve disc (37) arranged on a valve shaft (44) of the valve body (35) is controlled into a closed position of the valve opening (31) by a closing spring (45) working on the membrane (34) on the return flow chamber side against the valve body side compression spring (40).

10. A valve arrangement according to Claim 1, **characterised in that**,
- that a valve arrangement (1") is arranged in the return flow (46) of a by-pass flow (49) connected to the cooling circuit (47) of an internal combustion engine (48), whose
- valve body (50) on the one hand controlled into the closed position with the valve seat (51) brings throttle apertures (52) into operation and which
- on the other hand in the event of a pipe or hose break upstream from the valve arrangement (1") is controlled by spring force into a closed position with the casing (53) tightly worked together serving as a pipe or hose break valve, whereby as a result
- a further pipe or hose break valve (55) arranged in the supply flow (49) of the by-pass closes a through flow (56) controlled by supply pressure by an elastic lip seal (57) in the front edge region of the through flow (56), in which
- the pipe or hose break valve (55) retaining indexing tongues (58) engage.

## Revendications

1. Dispositif à soupape monté dans un courant dérivé, destiné à un échangeur de chaleur monté dans ce courant dérivé faisant partie d'un circuit de refroidissement, en particulier d'un moteur à combustion interne, comprenant, dans un boîtier (2, 30, 53) du dispositif à soupape (1, 1', 1") un corps de soupape (6, 35, 50) commandé en fonction de la pression de refoulement et contre la résistance d'un ressort de rappel (3, 45), dans son déplacement par rapport à un siège de soupape (5, 51) délimitant une section de conduite (4, 4', 4") et présentant un passage d'étranglement (7, 36, 52) servant à limiter la pression par régulation de l'écoulement,
**caractérisé en ce que**
- le corps de soupape (6, 35, 50), quand est atteint un débit du fluide de refroidissement correspondant à un transfert maximal de chaleur dans l'échangeur de chaleur (42), est commandé en fonction de la pression de refoulement pour passer en position de fermeture sur le siège de soupape (5, 51) et le passage d'étranglement (7, 36, 52) présente une section accordée à ce transfert maximal de chaleur,
- le dispositif à soupape (1, 1', 1") est combiné avec une soupape (55) de rupture de tube ou de tuyau, qui, si une telle rupture se produit dans le circuit dérivé aboutissant à l'échangeur de chaleur (42) interrompt la circulation du fluide de refroidissement au moyen d'un autre élément de fermeture (14, 27, 37, 57).

2. Dispositif à soupape selon la revendication 1,
**caractérisé en ce qu'**
- un corps de soupape (6) comportant le passage d'étranglement (7) peut se déplacer par glissement à l'intérieur d'une douille coulissante (8) portant le siège de soupape (5),
- la douille (8), logée dans le boîtier (2) entre des raccords de tube ou de tuyau (10, 11), avec le corps de soupape (6) en appui essentiellement étanche sur le siège de soupape (5) est, en cas de rupture de tube ou de tuyau, amenée en fonction de la pression et contre l'action d'un ressort de poussée (12), en butée étanche (bague d'étanchéité 13) sur le boîtier (2), et
- la venue en butée de la douille coulissante (8) fait qu'un élément élastique (14) monté fixe en aval dans le raccord de tube ou de tuyau (11) obture le passage d'étranglement (7).

3. Dispositif à soupape selon la revendication 1 ou 2,
**caractérisé en ce que**
la fermeture du passage d'étranglement (7) met en action un dispositif de fixation (15) qui maintient en position de fermeture étanche le corps de soupape (6) et la douille coulissante (8).

4. Dispositif à soupape selon l'une quelconque des revendications 1 à 3,
**caractérisé en ce que**
- le corps de soupape (6) présente du côté de l'entrée du fluide un corps de fermeture (17) de forme conique équipé d'un siège d'étanchéité (18) et pouvant glisser dans la douille coulissante (8) en étant guidé par des ailes (16) réparties autour de lui,
- le passage d'étranglement (7) se trouve dans un appendice (19) prévu du côté sortie et dépassant le siège de soupape (5) quand le corps de soupape (6) et la douille coulissante (8) sont en position de fermeture,
- l'appendice (19) présente des points d'arrêt pour accueillir des languettes d'arrêt (20) du dispositif de fixation (15) (figures 1 à 3).

5. Dispositif à soupape selon l'une quelconque des revendications 1 à 3,
**caractérisé en ce que**
- le corps de soupape (6) présente du côté de l'entrée du fluide un corps de fermeture (17) de forme conique équipé d'un siège d'étanchéité (18) et pouvant glisser dans la douille coulissante (8) en étant guidé par des ailes (16), réparties autour de lui,
- le passage d'étranglement (7) se trouve dans un appendice (19) prévu du côté sortie et dépassant le siège de soupape (5) quand le corps de soupape (6) et la douille coulissante (8) sont en position de fermeture, afin d'être en appui étanche sur l'élément élastique de fermeture (14),
- des barres élastiques d'arrêt (21), montées sur le corps de soupape (6), coopèrent, pour assurer la fixation, avec une plaque d'appui (22) portant l'élément de fermeture (14) (figure 4).

6. Dispositif à soupape selon l'une quelconque des revendications 1 à 3,
**caractérisé en ce que**
- le corps de soupape (6) présente du côté de l'entrée du fluide un corps de fermeture (23) en forme de pot pouvant glisser dans la douille coulissante (8) en étant guidé par des ailes (16) réparties autour de lui, et dont le fond (24) est percé d'un passage d'étranglement (7),
- au passage (7) est associé un élément de fermeture (27) monté en saillie sur une plaque (25) située du côté sortie du fluide et équipée d'une bague d'étanchéité (26) sur laquelle vient s'appliquer la douille coulissante (8),
- la plaque (25) est percée d'ouvertures (28) pour le passage de crochets d'arrêt (29) montés sur le corps de soupape (6) (figure 5).

7. Dispositif à soupape selon l'une quelconque des revendications 1 à 6,
**caractérisé en ce qu'**
une soupape antiretour (39) jouant le rôle de soupape de rupture de tube ou de tuyau, est montée dans le retour du courant dérivé de l'échangeur de chaleur (42).

8. Dispositif à soupape selon la revendication 1,
**caractérisé en ce que**
- dans un boîtier (30) sont entraînés ensemble une membrane (34) séparant une chambre de retour (31) d'une chambre d'entrée (33) divisée par une cloison séparatrice (32) percée d'une ouverture de soupape (4'), un corps de soupape (35) percé de passages d'étranglement (36) et commandant du côté sortie du fluide l'ouverture de soupape (4'), une tête de soupape (37) obturant l'ouverture (4') en cas de rupture de tube ou de tuyau, et
- une soupape antiretour (39) est montée dans une tubulure de retour (38) du boîtier (30), du côté de l'échangeur.

9. Dispositif à soupape selon la revendication 8,
**caractérisé en ce que**
- la membrane (34) tendue entre les parties de boîtier (30', 30") et guidée du côté de la chambre de retour, en fonction de la pression de refoulement, avec l'assistance d'un ressort de poussée (40) en prise avec le corps de soupape (35), commande le corps de soupape (35) avec ses passages d'étranglement (36) prévus dans le siège de soupape (41), et
- dans le cas d'une rupture de tube ou de tuyau, avec la soupape antiretour (39) fermée dans le retour (38), la tête de soupape (37) montée sur le corps de soupape (35) est amenée en position de fermeture de l'ouverture de soupape (31) par un ressort de fermeture (45) agissant du côté de la chambre de retour sur la membrane (34), contre l'action du ressort de poussée (40) situé du côté du corps de soupape.

10. Dispositif à soupape selon la revendication 1,
**caractérisé en ce qu'**
- un dispositif à soupape (1") est monté dans un retour (46) d'un courant dérivé (49) relié au circuit de refroidissement (47) d'un moteur à combustion interne (48),
- le corps de soupape (50), d'une part met en action en fonction de la pression les passages d'étranglement (52) amenés en position de fermeture sur le siège de soupape (51),
- le corps de soupape (50) d'autre part, quand dans le cas de rupture d'un tube ou d'un tuyau en amont du dispositif à soupape (1"), il est amené en fonction de la pression de refoulement dans une position de fermeture en servant de soupape de rupture de tube ou de tuyau, coopère de manière étanche avec le boîtier (53), et
- une autre soupape de rupture de tube et de tuyau (55) montée dans l'entrée (54) du courant dérivé (49) obture, sous la commande de la pression de refoulement, un passage (56) du fluide au moyen d'un joint d'étanchéité à lèvres (57) situé dans la zone marginale frontale du passage (56) dans lequel des languettes d'arrêt (58) sont en prise pour fixer la soupape de rupture de tube ou de tuyau (55).
